# EUROPEAN PATENT APPLICATION

(11) **EP 4 793 204 A1**
(43) Date of publication of application: **19.08.2026**
(21) Application number: 25158127.8
(22) Date of filing: 14.02.2025
(51) Int. Cl.: B65G 1/04

(54) **A MOBILE RACK**

(71) Applicant: AutoStore Technology AS, 5578 Nedre Vats (NO)
(72) Inventor: IVARJORD, Åsmund, 5578 Nedre Vats (NO); JAKOBSEN, Jonas Neraal, 5578 Nedre Vats (NO)
(74) Representative: Kilburn & Strode LLP

(57) **Abstract**

The disclosure relates to a mobile rack for an automated storage and retrieval system, the mobile rack comprising: a base configured to support a plurality of containers in a stack; a frame structure configured to at least partially surround sides of the plurality of containers; and a coupling mechanism configured to selectively fix the mobile rack to a storage grid of the automated storage and retrieval system.

## Description

### TECHNICAL FIELD

The disclosure relates to a mobile rack. More particularly, it relates to a mobile rack for an automated storage and retrieval system, to an automated storage and retrieval system, and to a method for operating an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

The containers are typically kept within the storage grid in order to prevent damage to the containers, which may otherwise lead to issues when the containers are stacked again within the storage grid. The ports are typically provided to enable an removal of an item from an interior of the container. The item may be transferred to a further container or otherwise transported to fulfil an order, while the container is transported back to the interior of the storage grid.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows an example of a mobile rack according to the present disclosure;
Fig. 6 shows an example of mobile racks and a storage grid according to the present disclosure;
Fig. 7 shows an example of a vending station according to the present disclosure;
Fig. 8 shows an example of a vending station according to the present disclosure;
Fig. 9 shows an example of a vending station according to the present disclosure;
Fig. 10 shows an example of a vending station according to the present disclosure;
Fig. 11 shows an example method for operating a storage and retrieval system according to the present disclosure.

### DETAILED DESCRIPTION

In overview, the disclosure relates to a mobile rack for an automated storage and retrieval system. The mobile rack includes a base configured to support a plurality of containers in a stack. In other words, the plurality of containers may be vertically stacked on top of each other, with each container being supported by the container immediately below it, except for the lowermost one of the containers which may be supported by the base. The mobile rack includes a frame structure configured to at least partially surround sides of the plurality of containers. In other words, the frame structure may include a housing or panels or frame at least partially surrounding sides of the stack. The mobile rack includes a coupling mechanism configured to selectively fix the mobile rack to a storage grid of the automated storage and retrieval system. Via selectively coupling and uncoupling of the coupling mechanism, the mobile rack may be respectively attached or detached from the storage grid. In other words, the mobile rack may be considered to be a removable subset of the storage grid, which can be detached and moved to other parts of the overall automated storage and retrieval system.

The provision and form of the mobile rack enables improved control of the containers outside of the storage grid, and limits damage to the containers during transportation and use. The ability to selectively couple the mobile rack to the storage grid enables time-efficient retrieval of containers, and items stored therein, from the storage grid because the mobile rack can be loaded in an efficient manner. This also provides a space-efficient solution since both the storage of the containers and the transport of the containers utilizes the same containers of the same unit size, which are stackable in a space-efficient manner. This space-efficiency and modularity may be increased further through coupling of one or more of the mobile racks together. The frame structure may comprise a collapsible frame in order to selectively reduce the volume of the mobile rack.

The ability to selectively decouple the mobile rack from the storage grid enables efficient movement of the containers to a vending station and/or to a delivery vehicle to transport the containers to a customer or to another storage grid. This can provide increased network effects where multiple automated storage and retrieval systems comprise respective mobile racks and storage grids as described herein. The mobile rack may be moveable on wheels coupled to the base, or may be supported on a robot such as an automated guided vehicle (AGV). The mobile rack may be moveable on rails provided on a floor of the facility housing the automated storage and retrieval system.

The vending station may have an aperture configured to receive the mobile rack as a whole. The vending station may include an access station configured to provide access to an interior of the containers in order to enable items to be retrieved therefrom. A robot may be provided in the vending station and may be configured to move containers between the mobile rack and the access station.

The features of the mobile rack therefore interact to provide more modular and more efficient storage and retrieval of containers in an automated storage and retrieval system.

### Automated storage and retrieval system overview

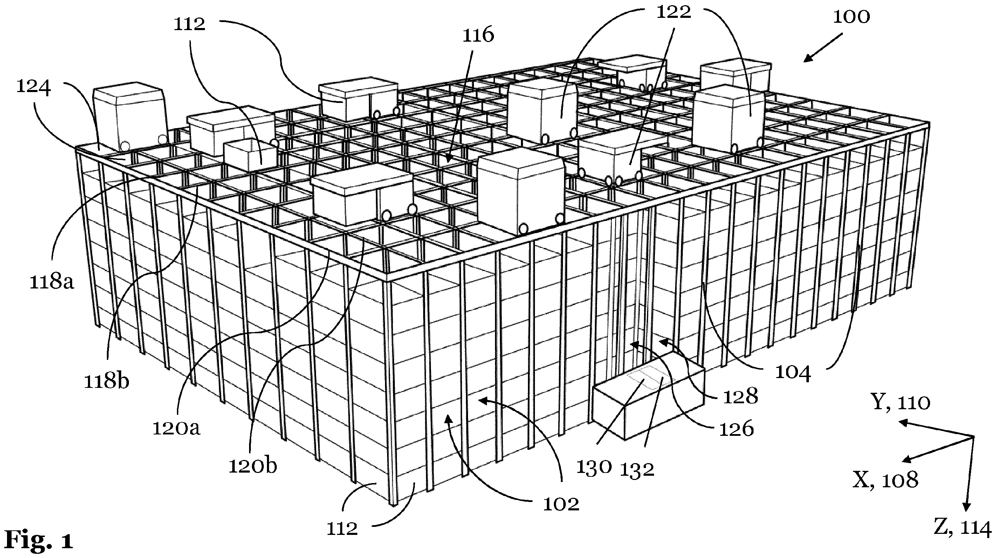

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

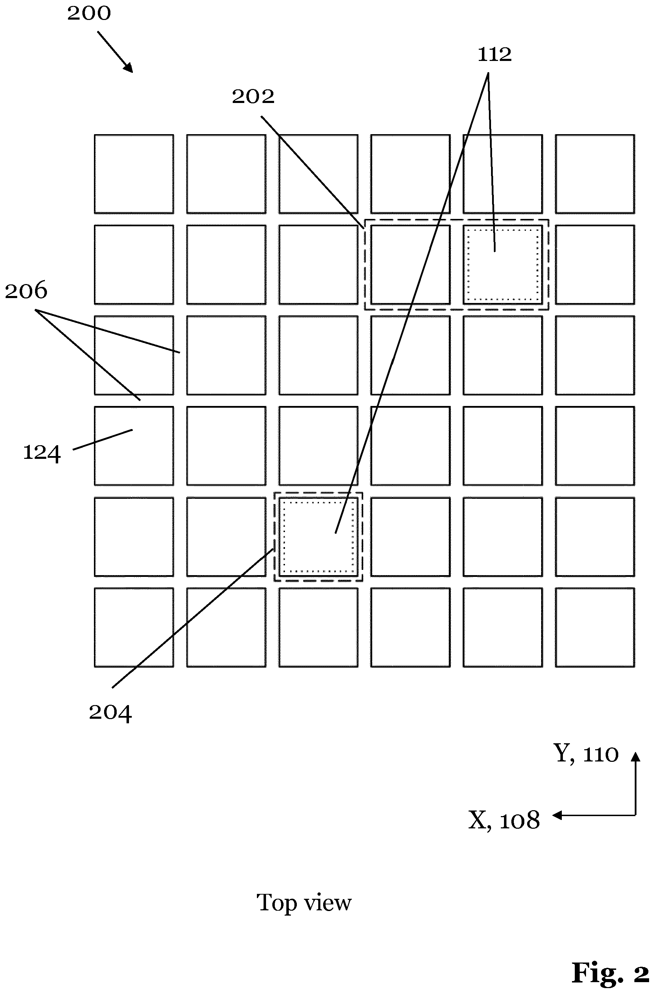

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

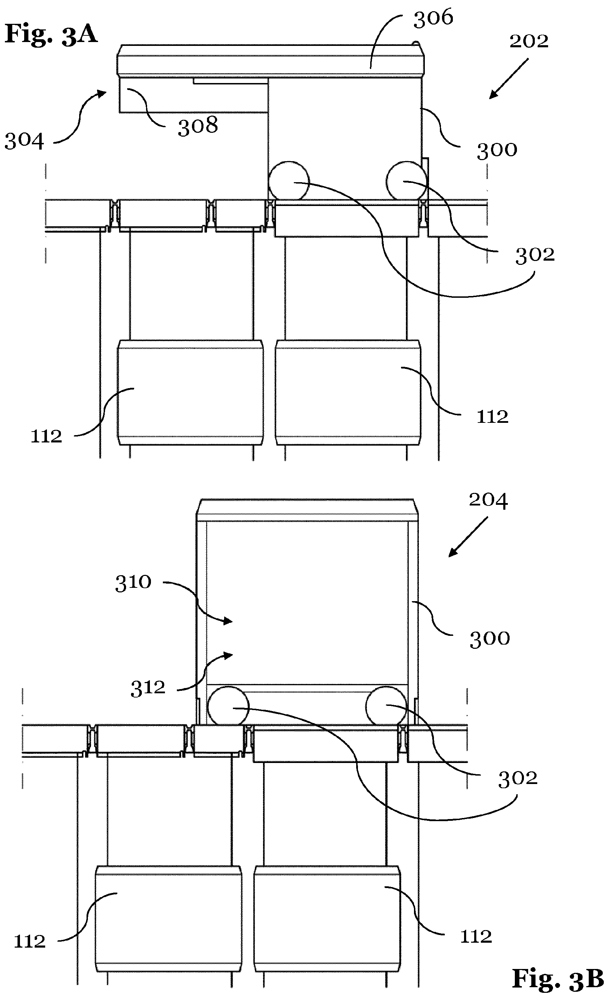

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

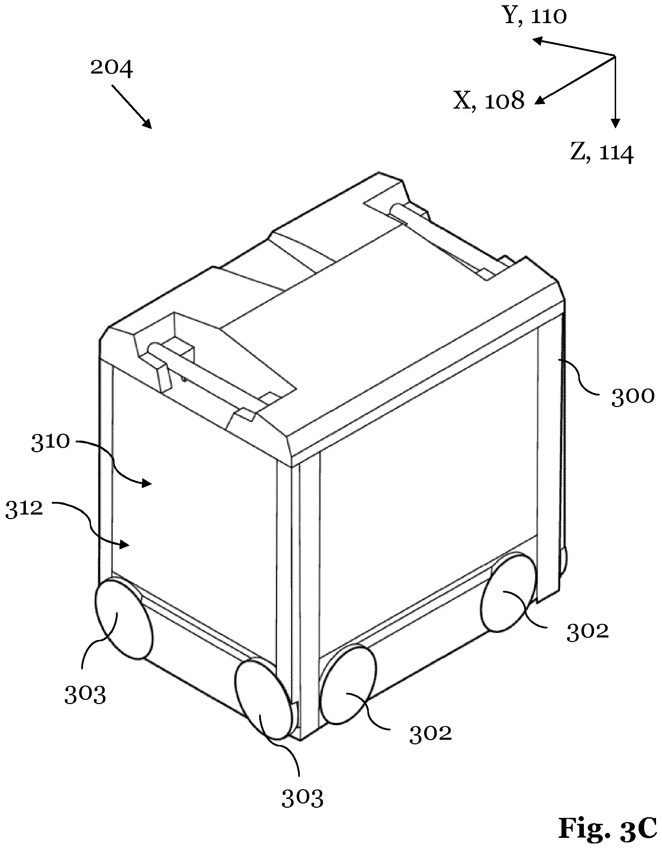

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

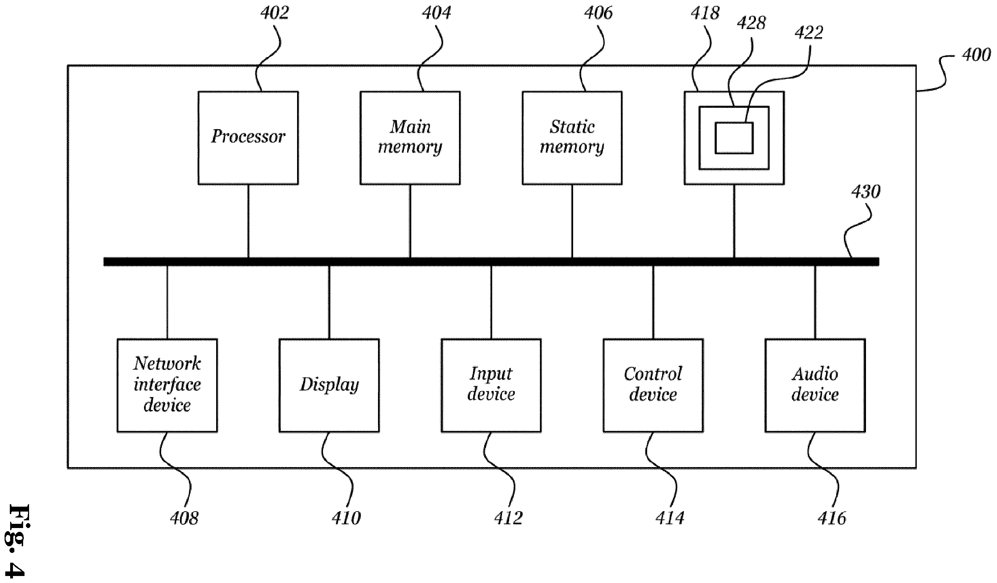

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a `digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

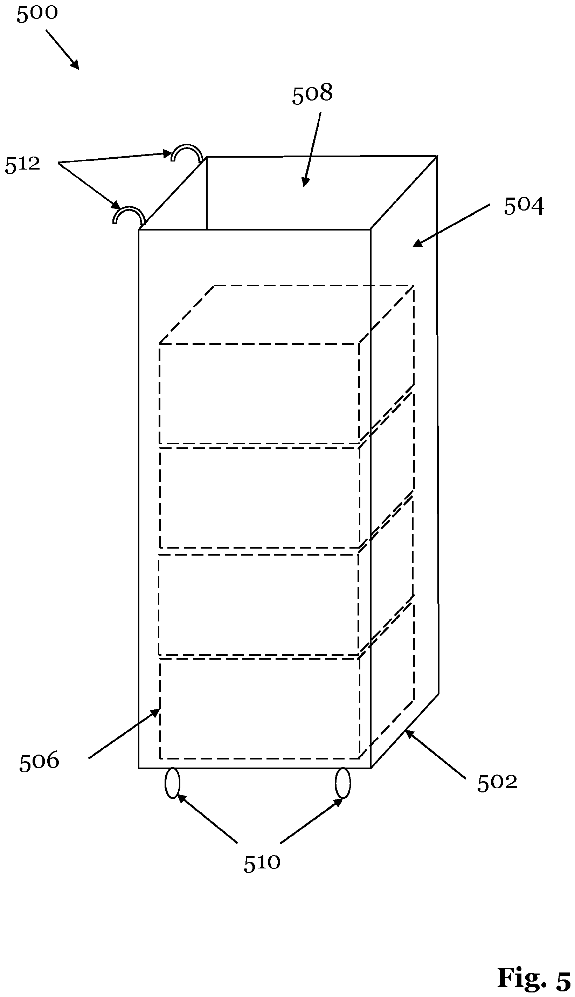

Fig. 5 shows an example of a mobile rack 500 according to the present disclosure. The mobile rack 500 is suitable and configured for use with an automated storage and retrieval system as described herein.

The mobile rack 500 comprises a base 502 configured to support a plurality of containers 506 in a stack. The containers 506 may also be referred to as bins 506 and may correspond to the bins 112 described in relation to Fig. 1. The base 502 may be arranged at a lower end of the mobile rack 500. A first, lowermost container 506 may be supported on the base. A second container 506 may be supported on the first container 506. A third container 506 may be supported on the second container 506, etc. In other words, the plurality of containers 506 may be arranged in a vertical stack in which each of the container 506 is in direct contact with another of the containers 506. While the mobile rack 500 is depicted as supporting a stack of four containers 506 in Fig. 5, it will be appreciated that a mobile rack as described herein may support any number of containers 506, e.g. 2, 3, 4, 5, 6, 7, 8, 9, 10 or more containers.

The mobile rack comprises a frame structure 504 configured to at least partially surround sides of the plurality of containers 506, i.e. sides of the stack of containers 506. The frame structure 504 (also referred to as a housing 504 herein) may be generally rectangular in plan view to correspond to the generally rectangular containers 506 in plan view.

The frame structure 504 may comprise a plurality of panels, each configured to cover a different respective side of the stack of containers 506. The frame structure 504 may comprise a collapsible frame comprising a plurality of frame members configured to partially cover different respective sides of the stack of container 506. The frame members may be pivotable with respect to each other to enable extension and collapsing of the frame structure 504 in a vertical direction. The frame structure 504 may comprise L-shaped brackets each extending vertically upward from a respective corner of the base. The L-shaped brackets may be configured to surround the corners of the containers 506 supported by the base 502, as well as portions of the sides of the containers 506 (i.e. portions directly adjacent to the corners).

In some examples, the frame structure 504 may surround all four lateral sides of the containers 506. In some examples, the frame structure 504 may only be provided on a subset of the sides of the containers 506, e.g. on two (opposite) sides of the containers 506.

The base 502 and the frame structure 504 may together define an interior cavity within which the containers 506 may be supported. The containers 506 are depicted with dashed lines in Fig. 5 to indicate that they are within the interior of the mobile rack 500/frame structure 504. The cavity may have corresponding dimensions to the stack of containers or have dimensions slightly larger than the stack of containers. In other words, the width and depth of the cavity in a horizontal plane may correspond respectively to the width and depth of the containers 506 in a horizontal plane, optionally with a small additional margin to account for misalignment or flex.

The top of the mobile rack 500 may comprise an opening or aperture 508 suitable for receiving a container 506 therethrough. The mobile rack 500 may receive a container 506 into the cavity from above through the aperture 508. The frame structure 504 may be described as comprising the aperture 508. The mobile rack 500 may be open at its upper end due to the aperture 508. In some examples, the mobile rack 500 may comprise a top cover that is selectively moveable, e.g. pivotable or slidable, to selectively cover or expose the aperture 508.

The mobile rack 500 is configured to be moved to various different locations. The mobile rack 500 may comprise one or more movement mechanisms such as wheels 510. The mobile rack 500 may comprise a wheel on each of the (four) respective corners of the base 502. The mobile rack 500 may be moveable by an AGV configured to support the mobile rack 500 from below, pull the mobile rack 500 and/or push the mobile rack 500. The base 502 may comprise a number of protrusions on its lower surface configured to separate the remainder of the base 502 from the floor on which it is supported. This may provide clearance to enable an AGV or at least part of an AGV to be positioned under the mobile rack 500, or to enable the mobile rack 500 to be lifted in another manner. The mobile rack 500 may be moved manually by a human operator or by a robot. The mobile rack 500 may be moveable on a conveyor. The mobile rack 500 may be moveable on rails provided on a floor of a storage facility comprising the mobile rack 500.

The mobile rack 500 comprises one or more coupling mechanisms 512 configured to selectively fix the mobile rack 500 to a storage grid of the automated storage and retrieval system. The storage grid may correspond to the storage grid 100 of Fig. 1. The coupling mechanism 512 may be configured to couple to a second coupling mechanism of the storage grid, i.e. defined at a surface thereof. The surface maybe an exterior surface of the storage grid. The surface may be part of an exterior covering of the storage grid or may be provided in a vertical frame member 104 of the storage grid. The coupling mechanism 512 may comprise a protrusion, such as a hook, and may be configured to couple to a recess or hole of the storage grid. In some cases, the coupling mechanism 512 may comprise a recess or hole configured to couple to a protrusion, such as a hook, of the storage grid. In some examples, the coupling mechanism 512 and the second coupling mechanisms may both comprise recesses, and a bar may be provided to couple the recesses. In some examples, the coupling mechanism 512 may comprise a mechanical fastener, a lock, or a click-fit arrangement. The coupling mechanism 512 may comprise a magnet. The second coupling mechanism may comprise a second magnet of opposite polarity to the magnet of the coupling mechanism 512. As would be appreciated by the skilled person, any suitable coupling mechanism may be used.

The mobile rack 500 may comprise one or more instances of the coupling mechanism on one, multiple or all of its (four) lateral sides. A first coupling mechanism 512 on a first side of the mobile rack 500 may be shaped and/or dimensioned to be suitable for coupling to a second coupling mechanism 512 on a second side of the mobile rack 500 opposite to the first side of the mobile rack 500. For example, the first coupling mechanism 512 may be a protrusion and the second coupling mechanism may be a recess, or vice versa. The first coupling mechanism 512 may be a first magnet and the second coupling mechanism 512 may be a second magnet with opposite polarity to the first magnet. This may enable multiple of the mobile racks 500 to be selectively coupled together in a more modular and interchangeable manner.

The coupling mechanism 512 may be configured to selectively couple the mobile rack 500 to the storage grid and to selectively decouple the mobile rack 500 from the storage grid. Coupling the mobile rack 500 to the storage grid may enable it to be used for storage of the containers 506 held therein and to receive containers 506 from above via robots 122 lowering the containers 506 down through the vertical columns 102 of the storage grid (see Fig. 1) to reach the mobile rack 500. Decoupling the mobile rack 500 may enable selective movement of several containers 506 at the same time in order to move them to a delivery vehicle, a vending station or another storage grid. This can be achieved in an efficient manner without requiring lifting and transporting of each of the containers 506 by a robot 124 and providing access to each of the containers 506 via a port 130, 132 (see Fig. 1). Therefore, this provides a particular efficient and modular storage and retrieval solution.

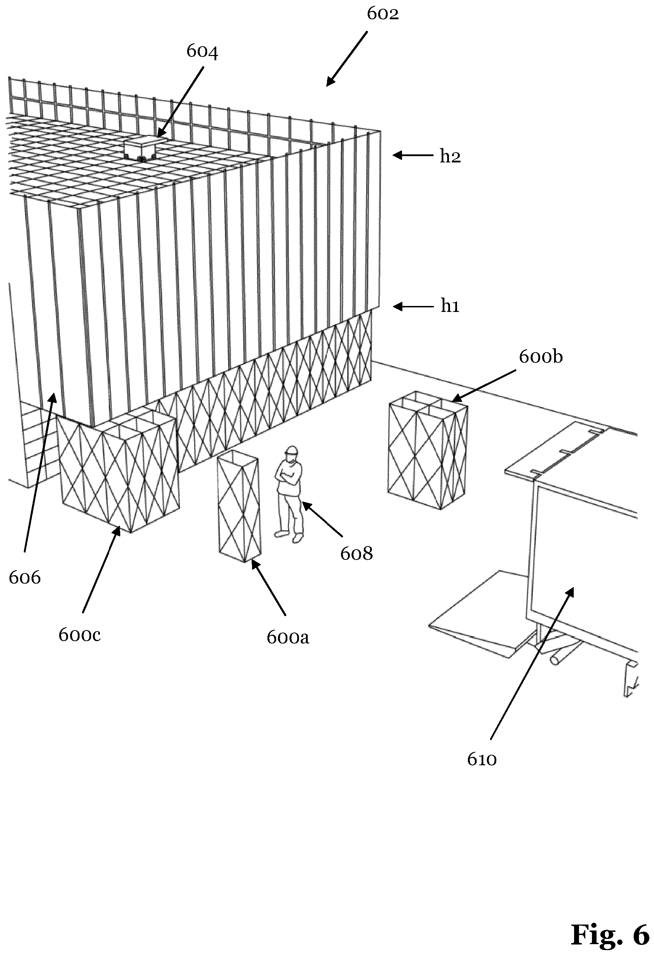

Fig. 6 shows an example of mobile racks 600 and a storage grid 602 according to the present disclosure. The mobile racks 600 may correspond to the mobile rack 500 described in relation to Fig. 5. The storage grid 602 may correspond to the storage grid 100 described in relation to Fig. 1. The mobile racks 600 and the storage grid 602 may be described as being comprised in an automated storage and retrieval system.

Fig. 6 depicts three mobile racks 600a, 600b, 600c, which may collectively be referred to as mobile racks 600. The mobile rack 600a is a 1x1 cell mobile rack, i.e. it is configured to support a single vertical stack of containers. The mobile rack 600b is a 2x2 cell mobile rack, i.e. it is configured to support four vertical stacks of containers in a two-by-two grid in plan view. The mobile rack 600c is a 3x3 cell mobile rack, i.e. it is configured to support nine vertical stacks of containers in a three-by-three grid in plan view. Mobile racks 600 with one-by-two, one-by three, two-by-three, three-by-four, four-by-four, etc. vertical stacks of containers in plan view are also considered and disclosed herein. A mobile rack 600 which comprises multiple vertical stacks of containers may be described herein as a mobile rack, or may be described as multiple mobile racks fixed together. For example, the 2x2 mobile rack 600b may comprise four of the 1x1 mobile racks 600a, i.e. for of the mobile racks 500, fixed together in a two-by-by arrangement. The one or more coupling mechanisms 512 (see Fig. 5) of each mobile rack may be configured to selectively fix each mobile rack 500, 600 to another mobile rack 500, 600, in a corresponding manner to that described for selectively fixing the mobile rack 500, 600 to the storage grid 100, 602.

The mobile racks 600 in Fig. 6 are depicted as comprising frame members to provide the frame structure at least partially surrounding the sides of the containers. The frame structures may comprise crossed frame members which may be pivotable with respect to each other in order to enable the frame members to be collapsed such that the vertical height of the mobile racks 600 can be selectively reduced.

As described in relation to Fig. 1, the storage grid 602 comprises a plurality of columns of stacked containers and robot 604 may move across rails on top of the stacks of containers. As shown in Fig. 6, the storage grid 602 may comprise an overhang portion 606. In the overhang portion 606, the vertical frame members 104 and the stacks of containers of the storage grid 602 may not extend to the floor of the facility housing the storage grid 602. Instead, in the overhang portion 602, the stacks of containers may only be present from a height h1 above the floor to a height h2 corresponding to the height of the storage grid. 602. The containers, vertical frame members, etc between the heights h1 and h2 in the overhang portion may be described as cantilevered and may be provided above an open space from the height of the floor to the height h1.

The height h1 may correspond to the height of one or more of the mobile racks 600. For example, the height h1 may be approximately in the range of 1.5m to 4m. The mobile racks 600 are configured to be disposed under the overhang portion 606 of the storage grid, i.e. below the cantilevered containers, vertical frame members, etc, provided from the height h1 to the height h2 in the overhang portion. When one or more of the mobile racks 600 are provided the below the overhang portion 606, the storage grid 602 and the mobile rack(s) 600 in combination may eliminate the overhang, such that the storage grid 602 is generally cuboid in shape.

Each of the mobile racks 600 may be selectively fixed to the storage grid 602 under the overhang portion 606 using the one or more coupling mechanisms 512. For example, each of the mobile racks 600 may be selectively fixed to a vertical side of the storage grid 602 under the overhang portion 606. The vertical side may be provided between the floor and the height h1 and may be at the boundary between the area where the overhang portion 606 is defined and the rest of the storage grid 602 (in which the containers may be stacked between the floor and the height h2). In other examples, the mobile racks 600 may be coupled to a horizontal surface of the storage grid 602 in the overhang portion 606, i.e. to the lower surface of the overhang portion 606 at the height h1. Where a mobile rack 600 comprises multiple individual mobile racks selectively fixed together, only one or a subset of the mobile racks may be selectively fixed to the storage grid 602, or all of the individual mobile racks may be selectively fixed to the storage grid 602.

The containers supported by the mobile racks 600 may correspond to and have corresponding dimensions to the containers stored in the storage grid 602, i.e. these may be the same containers. Each vertical column 102 of the storage grid 602 formed between the vertical frame members 104 thereof (see Fig. 1) may have the same dimensions in plan view to the dimensions of the mobile racks 600 in plan view (i.e. to a 1x1 mobile rack 600a). In other words, the mobile rack 600a has the same footprint as a one of the vertical columns 102, the mobile rack 600b has the same footprint as four vertical columns 102 in a two-by-two grid, the mobile rack 600c has the same footprint as nine vertical columns 102 in a three-by-three grid, etc. Therefore, the mobile racks 600 effectively provide a moveable/removeable subset of the storage grid 602. They are integrated into the storage of containers and movement of containers by the robots when selectively fixed below the overhang portion 606, while also being moveable to other locations.

In some examples, the vertical columns 102 of the overhang portion 606 may not be used for storing containers. Instead, the robot 604 may lower containers through these vertical columns 102 to a mobile rack below, which may receive the containers and support them in a stack as described herein.

In some examples, the vertical columns 102 may comprise respective moveable panels configured to selectively block respective vertical columns 102 of the overhang portion 606 in plan view. The one or more moveable panels may be provided at the bottom of the overhang portion 606, i.e. at or approximately at the height h1. Movement (e.g. sliding or rotation/pivoting) of each of the one or more moveable panels may be effected by a respective actuator coupled thereto, which may be manually controlled or may be controlled via instructions sent from a control device communicatively coupled to the respective actuator. A moveable panel may be moveable into a position in which it does not block a vertical column 104 when it is desired to lower a container through the vertical column to the mobile rack 600 positioned therebelow. The moveable panel may be moveable into a position blocking the vertical column 102 when it is desired to move a mobile rack 600 away from the storage grid 602, i.e. out from under the overhang portion 606. The moveable panel may therefore support containers stored between the heights h1 and h2 in the overhang portion 606, without them falling through the overhang portion 606 to the floor therebelow.

Fig. 6 also depicts a human operator 608. The mobile racks 600 may be moved from the storage grid 602 to one or more other locations by the human operator 608 and/or by a robot such as an AGV. In some examples, the floor of the facility housing the automated storage and retrieval system have rails disposed thereon for guiding movement of the mobile racks 600, e.g. for guiding the wheels 510 thereof. The rails may enable efficient and reliable movement of the mobile racks 600 between the storage grid 602 and defined locations. The mobile racks 600 may, via the rails or otherwise, be moved to a vending station as described herein, to a delivery vehicle for transporting the mobile rack 600 to another facility (such as another automated storage and retrieval system), and/or to buffer locations.

Moreover, a mobile rack 600 supporting containers may be moved from the delivery vehicle 610 or elsewhere to fix to the storage grid 602, e.g. to be fixed under the overhang portion 606. This may be used to insert containers and items stored therein into the storage grid 602, i.e. maybe used to replenish the storage grid 602, in an efficient manner.

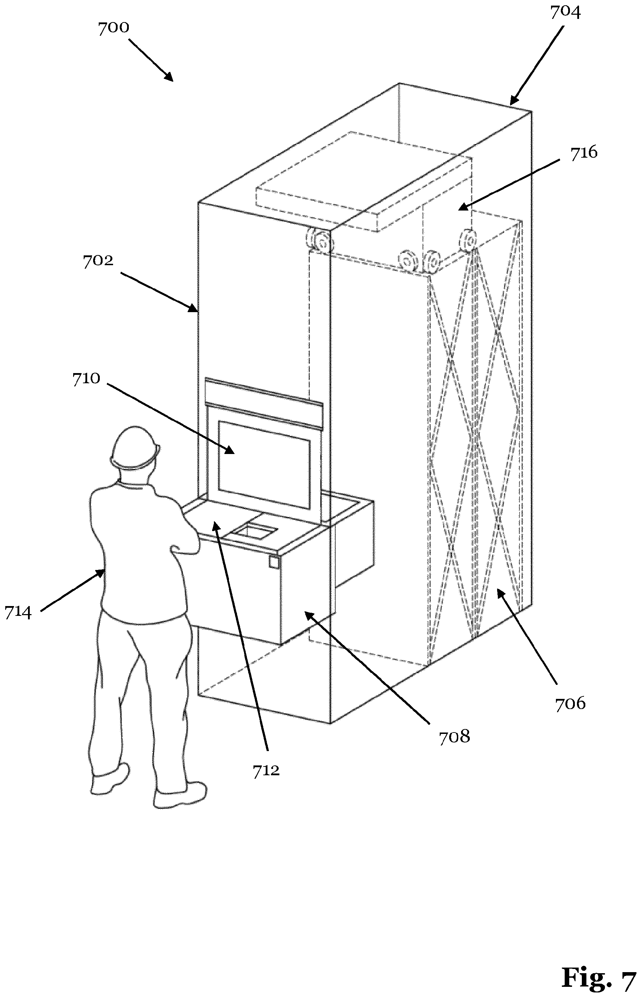

Fig. 7 shows an example of a vending station 700 according to the present disclosure. The vending station 700 may be comprised in an automated storage and retrieval system as described herein. The vending station 700 may be described as a mini fulfilment centre. The vending station 700 maybe provided in or as a self-service store. The vending station 700 may comprise a drop-off point or an in-store machine. The vending station 700 may be configured to provide a customer or operator or robotic picking device access to items stored within the containers described herein.

The vending station 700 may comprise a housing 702. The housing may be configured to obstruct access to an interior of the vending station in order to increase safety and security of the vending station 700. The vending station 700 may comprise an aperture or opening 704. The aperture 704 may be provided at the side or the rear of the vending station 700. In other words, the aperture 704 may be an aperture in the housing 702. The aperture 704 may be dimensioned to enable a mobile rack 706 to enter an interior of the vending station 700 through the aperture 704. In other words, the width of the aperture 704 may correspond to or be slightly larger than the width of the mobile rack 706. The height of the aperture 704 may correspond to or be slightly larger than the height of the mobile rack 706. The mobile rack 706 may correspond to the mobile racks 500, 600 described in relation to Fig. 5 and Fig. 6 respectively. The coupling mechanism may be configured to selectively fix the mobile rack 706 to the vending station, e.g. to a further coupling mechanism thereof which may be provided on the housing 702 of the vending station 700. Any of the coupling mechanisms described herein may be used for this purpose.

The vending station 700 may comprise an access station 708. The access station 708 may also be referred to as a port herein. The access station 708 may be configured to provide a customer, human operator, or robotic picking device with access to an item from an interior of one of the containers. For example, the access station 708 may provide access to an interior of the container. The container may have been previously stored in the storage grid and transported by the mobile rack to the vending station 700 as described herein. The access station 708 may comprise a compartment projecting from the vending station 700, with a housing to control/prevent access to an interior of the access station 708.

The access station 708 may comprise a user interface 710. The user interface may comprise a display screen. The user interface 710 may comprise one or more input mechanisms such as a touch screen, button, dial or joystick. The user interface 710 may comprise a payment device configured to enable a customer to submit payment for an item, e.g. a card reader. The user interface 710 may comprise a verification device (such as a face-ID scanner, a near field communication (NFC) sensor, a radio frequency identification (RFID) reader, or a Bluetooth sensor), configured to verify the identity of a customer 714 retrieving an order at the vending station 700.

The access station 708 may comprise an opening (i.e. an opening in its housing) and a cover 712 configured to move to selectively cover and uncover the opening. This may enable control over access to containers/the items stored therein. The cover may be configured to uncover the opening in response to successful verification of the customer 714 by the verification device. The access station 708 may comprise a movement mechanism, such as a conveyer, tilting device, drawer, or shuttle device, configured to selectively move the container in a forward direction (towards the opening/customer 714) and in a backward direction (away from the opening/customer 714).

In some examples, the access station 708 may comprise an SKU (Stock Keeping Unit) access controller, which, in combination with the cover 712, may be configured to limit access to one or more sub-compartments of the container. This may limit access of a customer to the item(s) which they have purchased. In some examples, the access station 708 may comprise a weight sensor positioned under and supporting a container when in the access station. In some examples, the access station 708 may comprise a camera. The weight sensor and/or the camera may be configured to monitor or determine whether items removed from the container correspond to those included in a customer order. The access station 708, or the vending station 700 as a whole, may comprise a processor communicatively coupled to any one or more of the above-mentioned components and configured to perform any one or more of the above-mentioned operations or provide instructions to the relevant components to do so.

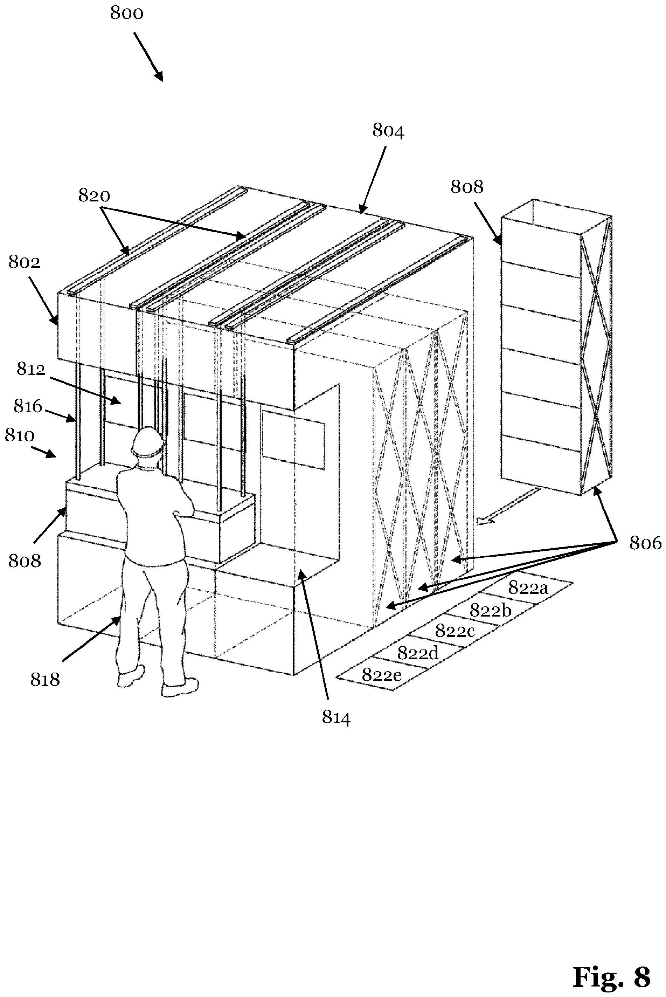

The vending station 700 may comprise a robot 716. The robot 716 may correspond to any of the robots 122, 202, 204 described in relation to Figs. 1-3C. The vending station 700 may comprise a rail system on which the robot 716 is moveable. The robot 716 may be moveable along rails defined on a top of the mobile rack 706. Alternatively, the robot 716 may comprise a gantry moveable on rails provided at a top interior surface of the vending station 700 (as further described in relation to Fig. 8). The robot 716 may comprise a lifting device or gripper configured to engage with a container, lift the container in a vertical direction, hold the container as the robot 716 moves in a horizontal direction, and lower the container in the vertical direction. The robot 716 may thereby be configured to move containers between the mobile rack 706 when positioned in the vending station 700 and the access station 708. Once an item has been retrieved from the container, the robot 716 may be configured to lift the container and transport it back to the mobile rack 706.

The vending station 700 may comprise a shuffle cell between the mobile rack 706 and the access station 708. The shuffle cell may also be referred to as a buffer cell or interchange cell. The shuffle cell may have corresponding dimensions to the 1x1 cell mobile rack 706. The shuffle cell may provide a generally empty, or not completely full, space within the vending station 700 to provide flexibility in the order or sequencing with which containers are provided to the access station 708 or provided back to the mobile rack 706. For example, a customer 714 may arrive at the access station 708 and request an item within a particular container which is not the topmost container in the mobile rack 706. The robot 716 may perform a 'igging' operation, moving the containers above the particular container into the shuffle cell, allowing it to then retrieve the particular container and transport it to the access station 708.

Fig. 8 shows an example of a vending station 800 according to the present disclosure. The vending station 800 may correspond to the vending station 700 except where described otherwise herein.

The vending station 800 may comprise a housing 802 and an opening 804 which may correspond to the corresponding components of the vending station 700. While the vending station 700 may be a single cell vending station, the vending station 800 may be a multiple cell vending station. In particular, the vending station 800 is depicted as a three cell vending station. Multiple (e.g. three) of each of the components described in relation to the vending station 800 may be present in the vending station 800 adjacent to each other. The vending station 800 may be configured to accommodate three adjacent mobile racks 806 through the aperture or apertures 804. The mobile rack may support containers 808. In some examples, a multiple cell mobile rack may be inserted into the aperture(s) 804 of the vending station 800, e.g. a one-by-three, two-by-three or three-by-three mobile rack.

The vending station 800 may comprise an access station 810, which may comprise corresponding features to the access station 708, except as where described otherwise herein. For example, the user interface 812 of the access station 810 may correspond to the user interface 712 of the access station 708.

The access station 810 may comprise a table or support surface 814 on which containers 808 may be lowered to and supported on. A container 808 may be lowered by a robot comprising a lifting device 816, which may comprise a gripper configured to engage with the container 808 and a pulley mechanism configured to lift and lower the gripper with the container 808 attached thereto. When the container 808 is positioned on the table 814, the gripper may be removed from the top of the container 808 by the robot to provide a customer 818, operator or robotic picking device access to an interior of the container 808 in order to retrieve an item therefrom.

The vending station 800 may comprise rails 820 at an upper interior surface thereof. The rails 820 may be configured to support a robot and enable the robot to move along the rails 820 in order to transport a container 808 from the mobile rack 806 to the access station 810. The robot may comprise a gantry or beam with engagement mechanisms configured to couple to and slide along the rails. The robot may comprise a motor/actuator configured to move the robot along the rails. The robot may comprise a motor/actuator configured to lower/raise the lifting device thereof. The robot may comprise a processor communicatively coupled to a controller of the vending station 800, access station 810, and/or the overall automated storage and retrieval system. This may enable the robot to receive instructions and process these instructions to transport particular containers at particular times.

Also shown in Fig. 8 are cell labels 822. The vending station 800 maybe considered to comprise several cells in a direction between the front (access station 810) and rear (mobile cell 806/aperture 804). The label of each cell may apply across the width of the vending station 800. The cells 822a and 822b may comprise optional mobile rack cells, each configured to receive a respective mobile rack 806 or a respective part of a mobile rack 806. At least one mobile rack cell, e.g. mobile rack cell 822c, may be present in the vending station 800. The cell 822d may be a shuffle cell configured to provide space for rearrangement or reordering of the containers 808 as described in relation to Fig. 7. The cell 822 may be an access station cell or a table cell at which access to items stored within the containers 808 is provided.

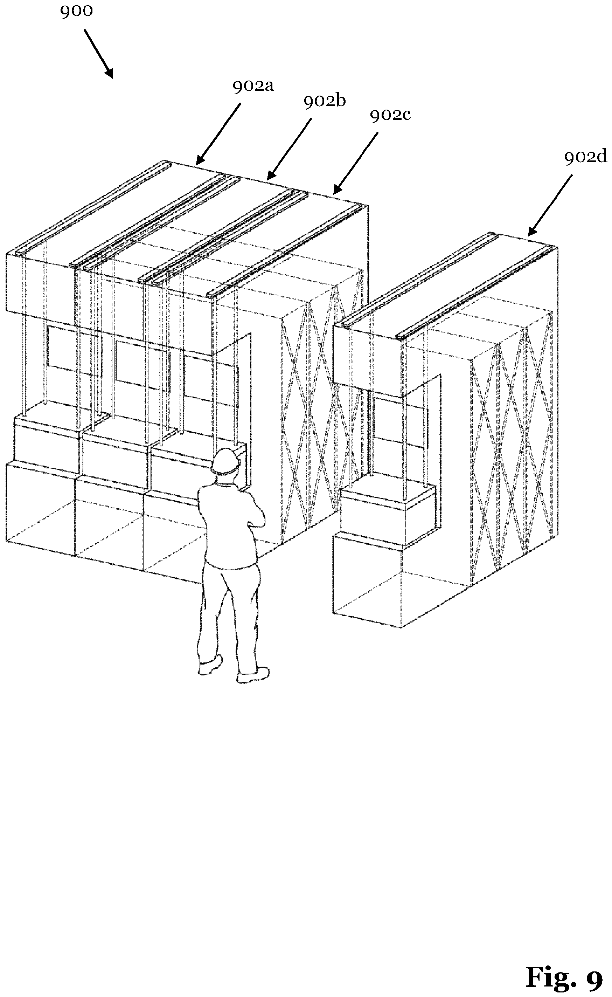

Fig. 9 shows an example of a vending station 900 according to the present disclosure. The vending station 900 may comprise corresponding features to the vending station 800 except where described otherwise herein.

In particular, both of the vending stations 800 and 900 may be multiple cell vending stations. However, while the vending station 800 may be an integrated or monolithic vending station 800, the vending station 900 may be a modular vending station 900. The vending station 900 may comprise multiple single cell vending stations 902a, 902b, 902c, 902d. Each of the single cell vending stations 902a-d may correspond to the vending station 700 or to a single cell of the vending station 800. Each of the single cell vending stations 902a-d may be attachable to and detachable from the others of the single cell vending stations 902a-d. For example, each of the single cell vending stations 902a-d may comprise one or more respective coupling mechanisms configured to couple to one or more respective coupling mechanisms of others of the single cell vending stations 902a-d. The coupling mechanisms may correspond to any of the coupling mechanisms described herein in relation to the mobile racks. Each of the single cell vending stations 902a-d may comprise a respective housing to make each of the single cell vending stations 902a-d separable and functional in isolation. The modularity of the vending station 900 enables increased flexibility, for example where the demand for stored items increases or decreases over time.

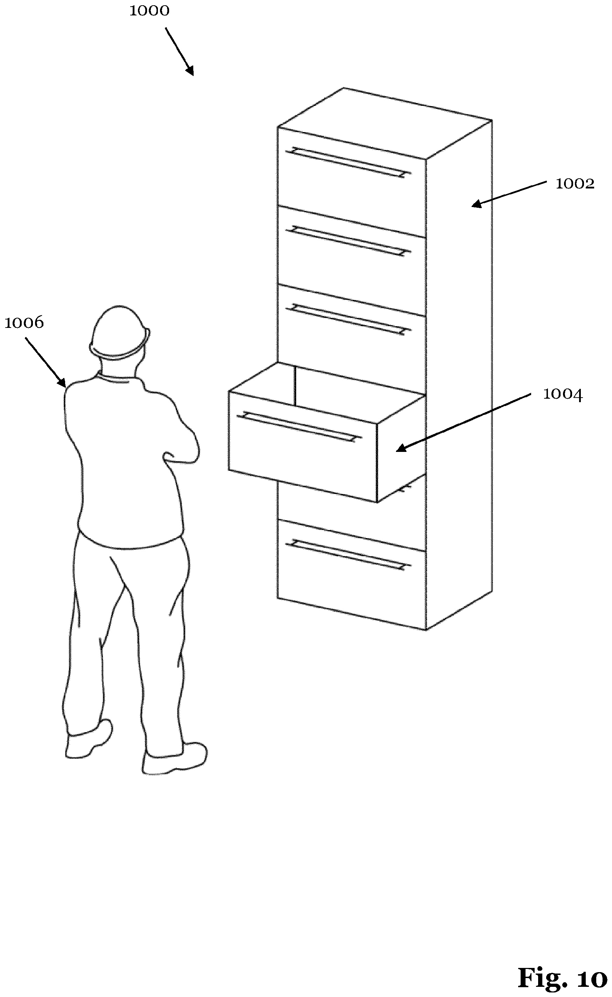

Fig. 10 shows an example of a vending station 1000 according to the present disclosure. The vending station 1000 may correspond to any of the vending stations described herein except where described otherwise below. The vending station 1000 may be a drawer-based vending station 1000 which provides a particularly low-footprint, reliable arrangement.

The vending station 1000 may comprise a housing 1002 configured to receive a mobile rack at a rear or side thereof through an aperture in the housing 1002. The vending station 1000 may comprise a plurality of drawers 1004. Each of the drawers 1004 may correspond in dimensions and position to a respective one of the containers in the mobile rack. As such, opening each of the drawers 1004 may provide a customer/operator 1006 access to an interior of a respective container through providing space to reach into the container or through sliding out of the container when the drawer 1004 is slid out. The vending station 1000 may comprise a verification device as described in relation to Fig. 7, or each individual drawer 1004 may comprise a respective one of such verification devices. Each drawer 1004 may comprise a respective locking device configured to enable opening of the drawer 1004 only in response to successful verification via the verification device.

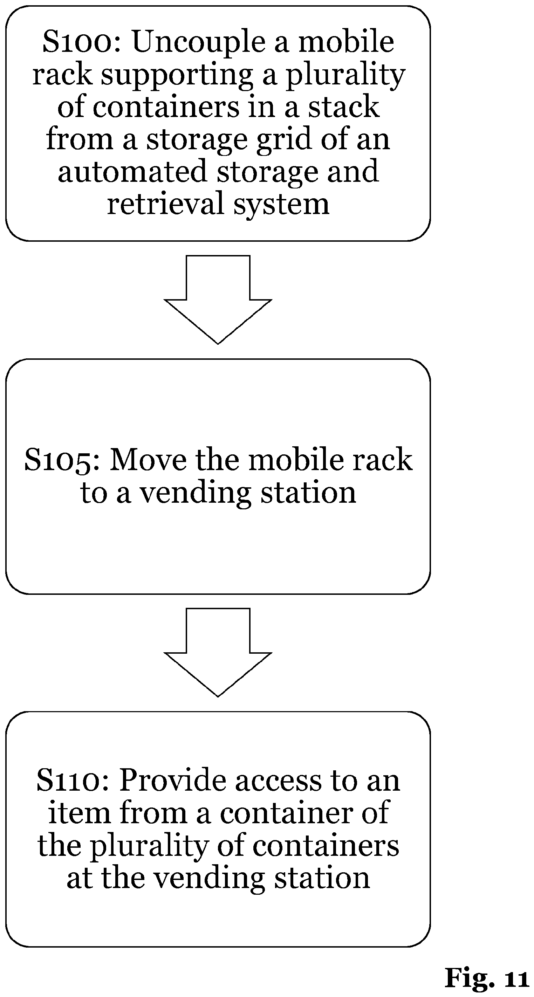

Fig. 11 shows an example method for operating a storage and retrieval system according to the present disclosure. The method may be performed using any of the systems and devices described herein, for example the automated storage and retrieval system, the storage grid, the mobile rack and/or the vending stations described herein. Any of the operations these systems and devices are described as performing or being configured to perform may be considered method steps of the present disclosure. Any of the method steps of the present disclosure may be considered operations the systems and devices described herein perform or are configured to perform.

In a step S100, the method comprises uncoupling a mobile rack supporting a plurality of containers in a stack from a storage grid of an automated storage and retrieval system. The mobile rack may be uncoupled by uncoupling a coupling device of the mobile rack from a coupling device on a surface of the mobile rack. The mobile rack may be uncoupled from, or from below, an overhang portion of the storage grid.

In a step S105, the method comprises moving the mobile rack to a vending station. The mobile rack may comprise wheels provided on its base. The mobile rack may be moveable on rails. The mobile rack may be moveable by an AGV. The mobile rack may be coupled to and/or inserted into the vending station.

In a step S110, the method comprises providing access to an item from a container of the plurality of containers at the vending station. A robot of the vending station may transport the container from the mobile rack to an access station of the vending station. A customer, human operator or robotic picking device may be provided with access to an interior of the container at the access station to enable retrieval of the item therefrom.

As described herein, the provision and form of the mobile rack enables improved control of containers outside of the storage grid, and limits damage to the containers during transportation and use. The ability to selectively couple the mobile rack to the storage grid enables time-efficient retrieval of containers, and items stored therein, from the storage grid because the mobile rack can be loaded in an efficient manner. Moreover, this also provides time-efficient loading of containers and items stored therein into the storage grid. This is a space-efficient solution since both the storage of the containers and the transport of the containers utilize components with the same unit size. The containers, which are used for both storage and transport without need to move items from one type of container to another, are stackable in a space-efficient manner. The ability to selectively decouple the mobile rack from the storage grid enables efficient movement of the containers to a vending station and/or to a delivery vehicle (to transport the containers to a customer or to another storage grid). The features of the mobile rack therefore interact to provide more modular and more efficient storage and retrieval of containers in an automated storage and retrieval system.

### Penultimate comments

Also provided herein is a vending station for an automated storage and retrieval system, the vending station comprising: a housing; an aperture configured to receive therethrough a mobile rack supporting a plurality of containers; an access station configured to provide access to an item from a container of the plurality of containers; and a robot configured to transport the container between the mobile rack and the access station. The vending station may comprise any of the features and functions of the vending stations described herein.

Also provided herein is a storage grid for an automated storage and retrieval system, the storage grid comprising a plurality of vertical frame members defining storage columns therebetween, the storage columns being configured to store containers in stacks, wherein the storage grid comprises: an overhang portion in which the vertical frame members and the storage columns are defined from a height h1 to a height h2 of the storage grid, wherein a cavity is provided below the overhang portion from the floor to the height h1; and a coupling mechanism configured to couple a mobile rack below the overhang portion. The storage grid may comprise any of the features and functions of the storage grids described herein.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A mobile rack for an automated storage and retrieval system, the mobile rack comprising:
a base configured to support a plurality of containers in a stack;
a frame structure configured to at least partially surround sides of the plurality of containers; and
a coupling mechanism configured to selectively fix the mobile rack to a storage grid of the automated storage and retrieval system.

2. The mobile rack of claim 1, wherein the frame structure comprises an aperture at the top of the frame structure configured to enable loading of a container onto the mobile rack from above.

3. The mobile rack of claim 1 or claim 2, wherein the frame structure comprises a collapsible frame.

4. The mobile rack of any preceding claim, comprising wheels coupled to the base of the mobile rack.

5. The mobile rack of any preceding claim, wherein the coupling mechanism comprises a protrusion configured to couple to a recess in a surface of the storage grid.

6. The mobile rack of any preceding claim, wherein the coupling mechanism is configured to selectively fix the mobile rack to a second mobile rack of the automated storage and retrieval system.

7. The mobile rack of any preceding claim, wherein the coupling mechanism is configured to selectively fix the mobile rack to a vending station of the automated storage and retrieval system.

8. An automated storage and retrieval system comprising:
the mobile rack of any preceding claim; and
a storage grid comprising a second coupling mechanism configured to selectively fix to the coupling mechanism of the mobile rack.

9. The automated storage and retrieval system of claim 8, wherein the storage grid comprises an overhang portion configured to receive the mobile rack below the overhang portion.

10. The automated storage and retrieval system of claim 9, wherein the storage grid comprises a moveable panel configured to selectively block a grid cell of the overhang portion.

11. The automated storage and retrieval system of any of claims 8-10, comprising a vending station configured to receive the mobile rack within an aperture thereof.

12. The automated storage and retrieval system of claim 11, wherein the vending station comprises an access station configured to provide access to an item from a container of the plurality of containers.

13. The automated storage and retrieval system of claim 11 or claim 12, wherein the vending station comprises a robot configured to move a container between the mobile rack and the access station.

14. The automated storage and retrieval system of any of claims 8-13, comprising a rail system configured to guide movement of the mobile rack.

15. A method for operating an automated storage and retrieval system, the method comprising:
uncoupling a mobile rack supporting a plurality of containers in a stack from a storage grid of the automated storage and retrieval system;
moving the mobile rack to a vending station; and
providing access to an item from a container of the plurality of containers at the vending station.

## Amended claims

### Amended claims in accordance with Rule 137(2) EPC.

1. A mobile rack (500, 600, 706, 806) for an automated storage and retrieval system, the mobile rack (500, 600, 706, 806) comprising:
a base (502) configured to support a plurality of containers (112, 506, 808) in a stack;
a frame structure (504) configured to at least partially surround sides of the plurality of containers (112, 506, 808); and
a coupling mechanism (512) configured to selectively fix the mobile rack (500, 600, 706, 806) to a storage grid (100, 602) of the automated storage and retrieval system,
wherein the coupling mechanism (512) is configured to selectively fix the mobile rack (500, 600, 706, 806) to a second mobile rack (500, 600, 706, 806) of the automated storage and retrieval system.

2. The mobile rack (500, 600, 706, 806) of claim 1, wherein the frame structure (504) comprises an aperture (508) at the top of the frame structure (504) configured to enable loading of a container (112, 506, 808) onto the mobile rack (500, 600, 706, 806) from above.

3. The mobile rack (500, 600, 706, 806) of claim 1 or claim 2, wherein the frame structure (504) comprises a collapsible frame.

4. The mobile rack (500, 600, 706, 806) of any preceding claim, comprising wheels (510) coupled to the base (502) of the mobile rack (500, 600, 706, 806).

5. The mobile rack (500, 600, 706, 806) of any preceding claim, wherein the coupling mechanism (512) comprises a protrusion configured to couple to a recess in a surface of the storage grid (100, 602).

6. The mobile rack (500, 600, 706, 806) of any preceding claim, wherein the coupling mechanism (512) is configured to selectively fix the mobile rack (500, 600, 706, 806) to a vending station (700, 800, 900, 100, 6020) of the automated storage and retrieval system.

7. An automated storage and retrieval system comprising:
the mobile rack (500, 600, 706, 806) of any preceding claim; and
a storage grid (100, 602) comprising a second coupling mechanism (512) configured to selectively fix to the coupling mechanism (512) of the mobile rack (500, 600, 706, 806).

8. The automated storage and retrieval system of claim 7, wherein the storage grid (100, 602) comprises an overhang portion (606) configured to receive the mobile rack (500, 600, 706, 806) below the overhang portion (606).

9. The automated storage and retrieval system of claim 8, wherein the storage grid (100, 602) comprises a moveable panel configured to selectively block a grid cell of the overhang portion (606).

10. The automated storage and retrieval system of any of claims 7-9, comprising a vending station (700, 800, 900, 100, 6020) configured to receive the mobile rack (500, 600, 706, 806) within an aperture (704, 804) thereof.

11. The automated storage and retrieval system of claim 10, wherein the vending station (700, 800, 900, 100, 6020) comprises an access station (708, 810) configured to provide access to an item from a container (112, 506, 808) of the plurality of containers (112, 506, 808).

12. The automated storage and retrieval system of claim 10 or claim 11, wherein the vending station (700, 800, 900, 100, 6020) comprises a robot (122, 202, 204, 716) configured to move a container (112, 506, 808) between the mobile rack (500, 600, 706, 806) and the access station (708, 810).

13. The automated storage and retrieval system of any of claims 7-12, comprising a rail system configured to guide movement of the mobile rack (500, 600, 706, 806).
